# EUROPEAN PATENT APPLICATION

(11) **EP 4 657 250 A1**
(43) Date of publication of application: **03.12.2025**
(21) Application number: 23959980.6
(22) Date of filing: 01.12.2023
(51) Int. Cl.: G06F 9/455

(54) **CLUSTER OPERATING SYSTEM IMPLEMENTATION METHOD AND APPARATUS, DEVICE, AND STORAGE MEDIUM**

(71) Applicant: Huang, William Xiao-qing, Shanghai 200245 (CN)
(72) Inventor: XIE, Hui, Shanghai 200245 (CN); MA, Qing, Shanghai 200245 (CN); CAO, Shouxin, Shanghai 200245 (CN); HUANG, William Xiao-qing, Shanghai 200245 (CN)
(74) Representative: LBP Lemcke, Brommer & Partner Patentanwälte mbB
(86) International application number: PCT/CN2023/135994
(87) International publication number: WO 2025/112074

(57) **Abstract**

The present disclosure provides a cluster operating system implementation method and apparatus, a device, and a storage medium. The method comprises: mapping the physical memories of computing nodes in a cluster operating system into a unified virtual memory space of a full cluster operating system; mapping sections in the virtual memory space to the devices of the computing nodes; and an application process directly executing an operation on the devices of the computing nodes by means of the virtual memory space. When different or identical application processes run on different computing nodes, cross-node memory data access, synchronization or scheduling, and cross-node file read-write and device access do not need to be carried out manually or explicitly, thereby improving the performance of an application or a computing task. Moreover, the working efficiency of the process or the computing task can be improved while distributed computing/application development is simplified, and the complexity of development and maintenance of the cluster operating system is reduced.

## Description

### TECHNICAL FIELD

The present disclosure relates to the field of cloud computing cluster control technology, and in particular, to a method and device for implementing a cluster operating system, a device, and a storage medium.

### BACKGROUND OF THE INVENTION

A cluster operating system refers to an operating system at the server level. Operating systems of servers mainly rely on various release versions based on the Linux kernel, and various Linux release versions cover most cloud computing instances. It is difficult for a single server to meet the development and deployment of application services in an application environment. In a distributed cluster, a plurality of servers are uniformly allocated and used, and the role of the operating system on each server has become minimal. Various application components and middleware become common scenarios of development and deployment of server applications. In such scenarios, management, allocation, arrangement, and integration of monitoring systems for cluster resources are oriented to an operating system of the whole data/computing center, which may also be called a "cluster operating system for cloud computing". A powerful cluster operating system may solve the problem on how to manage and use a large number of servers and their computing resources, storage resources, and other resources. The container technology (such as Docker) and the microservice architecture are mainstream trends in cloud computing, and cluster operating systems are more closely integrated with container arrangement tools (such as Kubernetes) as well to support automated deployment, scaling, and management of containers.

However, an application process may merely use resources of a computing node where the application process is located. For an application process or a computing task requiring a large amount of resources to complete, this not only increases the complexity of development and maintenance, but also limits the performance of the application process or the computing task.

### SUMMARY OF THE INVENTION

The present disclosure is intended to solve one of the technical problems in the related art at least to some extent.

To this end, a first objective of the present disclosure is to propose a method for implementing a cluster operating system, so as to solve the technical problem existing in the prior art that since an application process may merely use resources of a computing node where the application process is located, not only the complexity of development and maintenance are increased, but also the performance of the application process or the computing task is limited.

A second objective of the present disclosure is to propose a device for implementing a cluster operating system.

A third objective of the present disclosure is to propose a computing processing device.

In order to achieve the above objectives, an embodiment of a first aspect of the present disclosure proposes a method for implementing a cluster operating system. The method includes:
obtaining a permanent virtual memory by mapping a physical memory provided by each of computing nodes in the cluster operating system, where the permanent virtual memory includes segments of a plurality of types of virtual spaces;
mapping a plurality of segments in the permanent virtual memory to a device of each of the computing nodes; and
performing, on a device of a computing node to which a segment is mapped, operations of an application process on the segment in the permanent virtual memory, where each of the computing nodes in the cluster operating system has an application process running on it.

According to an embodiment of the present disclosure, the plurality of types of virtual spaces include a virtual process address space, a virtual file system space, and a virtual device space, and mapping the plurality of segments in the permanent virtual memory to the device of each of the computing nodes includes:
mapping segments corresponding to the virtual process address space and segments corresponding to the virtual file system space to a physical memory of each of the computing nodes respectively; and
obtaining a virtual device corresponding to a local physical device of each of the computing nodes by mapping the local physical device to segments corresponding to the virtual device space.

According to an embodiment of the present disclosure, the virtual process address space includes a plurality of process spaces, and mapping the segments corresponding to the virtual process address space to the physical memory of each of the computing nodes includes:
determining a process space corresponding to each of application processes in the cluster operating system from the plurality of process spaces of the virtual process address space, where each of the application processes has a fixed process space in the virtual process address space; and
mapping segments of the process space corresponding to each of the application processes to the physical memory of each of the computing nodes respectively.

According to an embodiment of the present disclosure, performing, by the application process running on each of the computing nodes through operations on the segments in the virtual process address space, operations on the device of the computing node to which the segments are mapped includes:
loading, according to an address of the process space, non-operation time data of the application process into the process space corresponding to the application process;
assigning, when each of the computing nodes runs the application process, operation time data corresponding to the application program in the process space corresponding to the application program; and
pointing a program counter pointer through which the computing node runs the application program to the address of the process space corresponding to the application process, so as to run the application program in the physical memory of the computing node corresponding to the process space.

According to an embodiment of the present disclosure, the method further includes:
transmitting, in a case where any application process has a data transmission requirement, an object pointer of data corresponding to the data transmission requirement in the virtual process address space to a target application process; and
completing data transmission by the target application process accessing the virtual process address space via the object pointer.

According to an embodiment of the present disclosure, mapping the segments corresponding to the virtual process address space and the segments corresponding to the virtual file system space to the physical memory of each of the computing nodes respectively includes:
registering the physical memory provided by each of the computing nodes to the permanent virtual memory;
dividing the physical memory registered to the permanent virtual memory into physical memory segments with the same size as the segments; and
mapping the segments corresponding to the virtual process address space and the segments corresponding to the virtual file system space to the physical memory segments of each of the computing nodes respectively.

According to an embodiment of the present disclosure, mapping the segments corresponding to the virtual file system space to the physical memory of each of the computing nodes includes:
mapping, according to a predetermined policy, the segments corresponding to the virtual file system to physical memory segments of a storage device of each of the computing nodes; and
performing, on the device of the computing node to which the segment is mapped, the operations of the application process on the segment in the permanent virtual memory, where each of the computing nodes in the cluster operating system has an application process running on it, includes:
performing data read/write operations in the physical memory segments of the storage device of the computing node by the application process running on each of the computing nodes, so as to perform data read/write operations in the virtual file system space by the application process running on each of the computing nodes.

According to an embodiment of the present disclosure, mapping the segments corresponding to the virtual process address space and the segments corresponding to the virtual file system space to the physical memory of each of the computing nodes respectively includes:
mapping the segments corresponding to the virtual process address space and the segments corresponding to the virtual file system space to the physical memory of each of the computing nodes respectively by at least one of: a redundant mapping approach, or a distributed consistency approach.

According to an embodiment of the present disclosure, obtaining the virtual device corresponding to the local physical device of each of the computing nodes by mapping the local physical device to the segments corresponding to the virtual device space includes:
mapping, by a Permanent Virtual Memory Global Device Managers (PVM_GDM) of each of the computing nodes, the local physical device of each of the computing nodes to the virtual device space; and
creating the virtual device corresponding to the local physical device in the segments corresponding to the virtual device space.

According to an embodiment of the present disclosure, performing, on the device of the computing node to which the segment is mapped, the operations of the application process on the segment in the permanent virtual memory, where each of the computing nodes in the cluster operating system has an application process running on it, includes:
performing, on the local physical device of the computing node to which the segment is mapped, read/write operations of the application process running on each of the computing nodes on the virtual device.

According to the method for implementing a cluster operating system provided by the present disclosure, by mapping a physical memory of each of the computing nodes into a unified permanent virtual memory of a full cluster operating system and mapping segments in the permanent virtual memory to a device of the computing node, an application process may directly perform operations on the device of the computing node through the permanent virtual memory without requiring manual or explicit access, synchronization, or scheduling of memory data across nodes and file read/write and device access across nodes during running, increasing the performance of an application or computing task. Moreover, while distributed computing/application development is simplified, the working efficiency of processes or computing tasks may be increased, and the complexity of development and maintenance of the cluster operating system may be reduced.

In order to achieve the above objectives, an embodiment of a second aspect of the present disclosure proposes a device for implementing a cluster operating system. The device includes:
a first mapping module configured to obtain a permanent virtual memory by mapping a physical memory provided by each of computing nodes in the cluster operating system, where the permanent virtual memory includes segments of a plurality of types of virtual spaces;
a second mapping module configured to map a plurality of segments in the permanent virtual memory to a device of each of the computing nodes; and
a performing module configured to perform, on a device of a computing node to which a segment is mapped, operations of an application process on the segment in the permanent virtual memory, where each of the computing nodes in the cluster operating system has an application process running on it .

According to an embodiment of the present disclosure, the plurality of types of virtual spaces include a virtual process address space, a virtual file system space, and a virtual device space, and the second mapping module is further configured to:
map segments corresponding to the virtual process address space and segments corresponding to the virtual file system space to a physical memory of each of the computing nodes respectively; and
obtain a virtual device corresponding to a local physical device of each of the computing nodes by mapping the local physical device to segments corresponding to the virtual device space.

According to an embodiment of the present disclosure, the virtual process address space includes a plurality of process spaces, and the second mapping module is further configured to:
determine a process space corresponding to each of application processes in the cluster operating system from the plurality of process spaces of the virtual process address space, where each of the application processes has a fixed process space in the virtual process address space; and
map segments of the process space corresponding to each of the application processes to the physical memory of each of the computing nodes respectively.

According to an embodiment of the present disclosure, the performing module is further configured to:
load, according to an address of the process space, non-operation time data of the application process into the process space corresponding to the application process;
assign, when each of the computing nodes runs the application process, operation time data corresponding to the application program in the process space corresponding to the application program; and
point a program counter pointer through which the computing node runs the application program to the address of the process space corresponding to the application process, so as to run the application program in the physical memory of the computing node corresponding to the process space.

According to an embodiment of the present disclosure, the device further includes a transmission module, which is configured to:
transmit, in a case where any application process has a data transmission requirement, an object pointer of data corresponding to the data transmission requirement in the virtual process address space to a target application process; and
complete data transmission by the target application process accessing the virtual process address space via the object pointer.

According to an embodiment of the present disclosure, the second mapping module is further configured to:
register the physical memory provided by each of the computing nodes to the permanent virtual memory;
divide the physical memory registered to the permanent virtual memory into physical memory segments with the same size as the segments; and
map the segments corresponding to the virtual process address space and the segments corresponding to the virtual file system space to the physical memory segments of each of the computing nodes respectively.

According to an embodiment of the present disclosure, the second mapping module is further configured to:
map, according to a predetermined policy, the segments corresponding to the virtual file system to physical memory segments of a storage device of each of the computing nodes; and
the performing module is further configured to:
perform data read/write operations in the physical memory segments of the storage device of the computing node by the application process running on each of the computing nodes, so as to perform data read/write operations in the virtual file system space by the application process running on each of the computing nodes.

According to an embodiment of the present disclosure, the second mapping module is further configured to:
map the segments corresponding to the virtual process address space and the segments corresponding to the virtual file system space to the physical memory of each of the computing nodes respectively by at least one of: a redundant mapping approach, or a distributed consistency approach.

According to an embodiment of the present disclosure, the second mapping module is further configured to:
map, by a PVM_GDM of each of the computing nodes, the local physical device of each of the computing nodes to the virtual device space; and
create the virtual device corresponding to the local physical device in the segments corresponding to the virtual device space.

According to an embodiment of the present disclosure, the performing module is further configured to:
perform, on the local physical device of the computing node to which the segment is mapped, read/write operations of the application process running on each of the computing nodes on the virtual device.

In order to achieve the above objectives, an embodiment of a third aspect of the present disclosure proposes a computing processing device. The computing processing device includes:
a memory having stored thereon computer-readable codes; and
one or more processors, where when the computer-readable codes are executed by the one or more processors, the computing processing device performs the method for implementing a cluster operating system proposed by the embodiment of the first aspect of the present disclosure.

In order to achieve the above objectives, an embodiment of a fourth aspect of the present disclosure proposes a computer program, including computer-readable codes which, when running on a computing processing device, cause the computing processing device to perform the method for implementing a cluster operating system proposed by the embodiment of the first aspect of the present disclosure.

In order to achieve the above objectives, an embodiment of a fifth aspect of the present disclosure proposes a computer-readable storage medium having stored thereon the computer program proposed by the embodiment of the sixth aspect of the present disclosure.

The additional aspects and advantages of the present disclosure will be partially set forth in the following description, and will partially become apparent from the following description or be understood through the practice of the present disclosure.

### BRIEF DESCRIPTION OF DRAWINGS

The aforementioned and/or additional aspects and advantages of the present disclosure will become apparent and easily understood from the following description of embodiments with reference to the accompanying drawings.
FIG. 1 is a flowchart of a method for implementing a cluster operating system provided by an embodiment of the present disclosure.
FIG. 2 is a schematic diagram of an architecture of a cluster operating system provided by an embodiment of the present disclosure.
FIG. 3 is a schematic diagram of an architecture of a cluster operating system provided by another embodiment of the present disclosure.
FIG. 4 is a flowchart of a method for implementing step S12 in FIG. 1 provided by an embodiment of the present disclosure.
FIG. 5 is a flowchart of a method for implementing step S121 in FIG. 4 provided by an embodiment of the present disclosure.
FIG. 6 is a flowchart of a method for implementing step S13 in FIG. 1 provided by an embodiment of the present disclosure.
FIG. 7 is a flowchart of a method for implementing step 5122 in FIG. 4 provided by an embodiment of the present disclosure.
FIG. 8 is a schematic diagram of a structure of a device for implementing a cluster operating system provided by an embodiment of the present disclosure.
FIG. 9 is a schematic diagram of a structure of a server provided by an embodiment of the present disclosure.
FIG. 10 is a schematic diagram of a structure of a cloud server provided by an embodiment of the present disclosure.
FIG. 11 is a schematic diagram of a structure of a computing processing device provided by an embodiment of the present disclosure.
FIG. 12 is a schematic diagram of a portable or fixed storage unit for program codes for implementing the method according to the present disclosure, provided by an embodiment of the present disclosure.

### DETAILED DESCRIPTION OF THE INVENTION

The embodiments of the present disclosure will be described in detail below, and examples of the embodiments are shown in the accompanying drawings, in which identical or similar reference numerals from beginning to end represent identical or similar elements, or elements having identical or similar functions. The embodiments described below with reference to the accompanying drawings are exemplary and are intended to explain the present disclosure rather than be construed as limiting the present disclosure.

Before introducing a method and device for implementing a cluster operating system, a device and a storage medium provided by the present disclosure, technical problems existing in related scenarios will be introduced. From the current situation of cluster operating systems, it can be seen that the cluster operating systems and their related tools in the current cloud computing mainly solve the problem on how to automatically schedule and allocate resources for processes/applications on cluster computing nodes. In application development, a special technique or method is used to access other nodes manually or explicitly, otherwise a process/application may only use resources of a computing node where the process/application is located, but cannot use computing and storage resources of other computing nodes. For an application process or a computing task requiring a large amount of resources to complete, this not only increases the complexity of development and maintenance, but also limits the performance of the application process or the computing task.

In view of this, the method for implementing a cluster operating system provided by the present disclosure is intended to allow a process not to require manual or explicit access, synchronization or scheduling of memory data across nodes and file read/write and device access across nodes during running, increasing the performance of an application or computing task. Moreover, while distributed computing/application development is simplified, the working efficiency of processes or computing tasks may be increased, and the complexity of development and maintenance of the cluster operating system may be reduced.

The method and device for implementing a cluster operating system, the device and the storage medium according to the embodiments of the present disclosure will be described below with reference to the accompanying drawings.

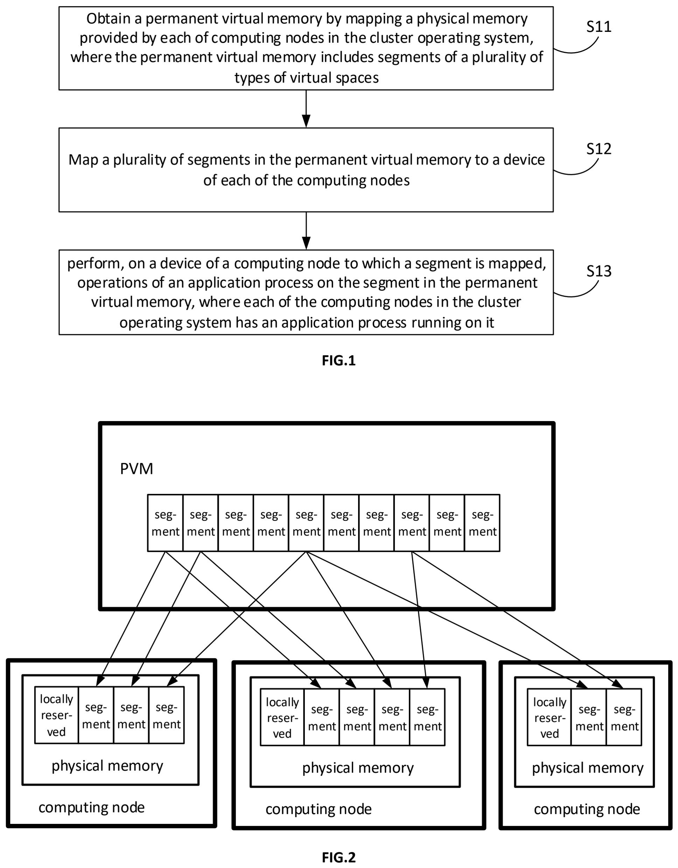

FIG. 1 is a flowchart of the method for implementing a cluster operating system provided by an embodiment of the present disclosure. As shown in FIG. 1, the method for implementing a cluster operating system according to the embodiment of the present disclosure includes the following steps.

In step S11, a permanent virtual memory is obtained by mapping a physical memory provided by each of computing nodes in the cluster operating system, where the permanent virtual memory includes segments of a plurality of types of virtual spaces.

As shown in FIG. 2, at the Cloud Cluster Operating System (CCOS) level in a cloud/cluster computing scenario, the computing nodes in the cluster operating system uniformly map the provided physical memories through an independent module, i.e., a Permanent Virtual Memory Manager (PVMM), to form a globally unified and unique permanent virtual memory, i.e., a Permanent Virtual Memory (PVM). That is, the physical memory of each of the computing nodes in the cluster operating system is mapped into a unified permanent virtual memory of the whole cluster operating system.

Each type of virtual space may include at least one Segment, and each segment has a corresponding address. Under unified management and scheduling of the PVMM, a certain space is divided from the physical memory in each computing node to form the complete permanent virtual memory PVM together.

In the embodiments of the present disclosure, as shown in FIG. 2, an operating system of the PVMM runs on each computing node in the cluster operating system. When a computing node is started, the PVMM divides out a certain proportion of physical memory in the computing node, maps the proportion of physical memory to the permanent virtual memory PVM, and locally reserves the physical memory which is not mapped to the permanent virtual memory PVM.

Continuing to refer to FIG. 2, each computing node may include at least one Central Processing Unit (CPU) node, and each CPU node includes a processor, locally reserved physical memory, and physical memory mapped to the permanent virtual memory PVM. Data may be transmitted between the computing nodes by means of Remote Direct Memory Access (RDMA).

In step S12, a plurality of segments in the permanent virtual memory are mapped to a device of each of the computing nodes.

In the embodiments of the present disclosure, the physical memory for mapping on the computing node may be mapped to the plurality of segments in the permanent virtual memory, and the physical memory which is not mapped to the permanent virtual memory PVM is locally reserved and will not be mapped to the plurality of segments in the permanent virtual memory.

A computing node may map one or more segments into its physical memory. Moreover, when the physical memory of the computing node is mapped to the segments in the permanent virtual memory PVM, a mapping relationship may be established with the segments in the permanent virtual memory PVM by a one-to-one correspondence approach, for example.

In step S13, operations of an application process on a segment in the permanent virtual memory are performed on a device of a computing node to which the segment is mapped, where each of the computing nodes in the cluster operating system has an application process running on it.

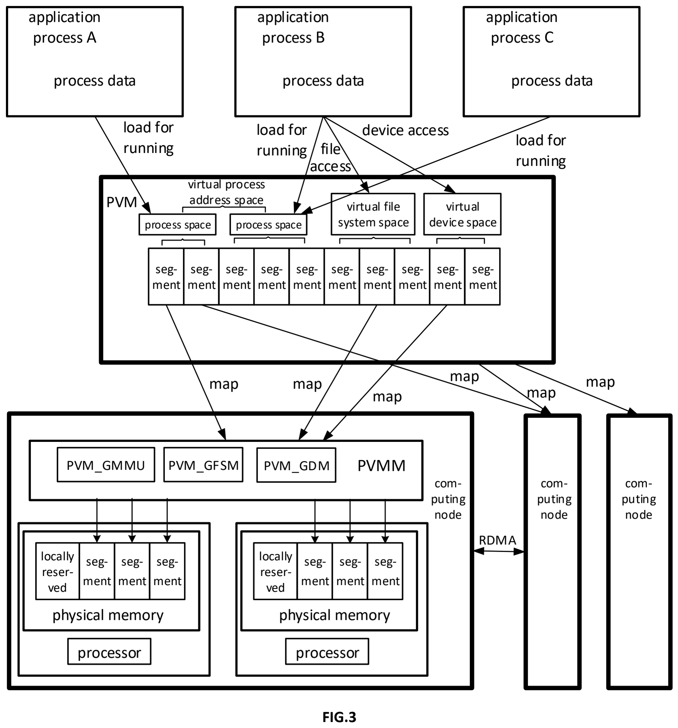

As shown in FIG. 3, the application process running on each of the computing nodes may be loaded and run in the permanent virtual memory, and may also perform file access and device access in the permanent virtual memory. Specific loading and running, file access and device access will be introduced in detail in the subsequent embodiments.

Since 64-bit processors have become the absolute mainstream and the network speed can already be faster than the storage system speed, massive memories of a large number of computing nodes in the cluster operating system may be processed through a high-speed network. By uniformly managing the memory resources of the computing nodes in the cluster operating system at the operating system level and constructing a globally unified permanent virtual memory for the cluster on the basis of such unified memory management, the shortcomings of the cluster operating system and its tools in terms of use, maintenance, performance and so on in the cloud computing scenario may be solved.

According to the method for implementing a cluster operating system provided by the present disclosure, by mapping a physical memory of each of the computing nodes into a unified permanent virtual memory of a full cluster operating system and mapping segments in the permanent virtual memory to a device of the computing node, an application process may directly perform operations on the device of the computing node through the permanent virtual memory without requiring manual or explicit access, synchronization, or scheduling of memory data across nodes and file read/write and device access across nodes during running, increasing the performance of an application or computing task. Moreover, while distributed computing/application development is simplified, the working efficiency of processes or computing tasks may be increased, and the complexity of development and maintenance of the cluster operating system may be reduced.

According to an embodiment of the present disclosure, the plurality of types of virtual spaces include a virtual process address space, a virtual file system space, and a virtual device space. Part of the permanent virtual memory PVM serves as the virtual file system space shared in the cluster operating system, one or more memory-based virtual file systems may be created in the virtual file system space, and the virtual file system space may be accessed by all the application processes. Part of the permanent virtual memory PVM serves as the virtual process address space of the application processes, and according to a preset empirical value, the virtual process address space is further divided into a plurality of mutually independent process spaces with a certain size.

It can be understood that each of the virtual process address space, the virtual file system space, and the virtual device space includes at least one segment.

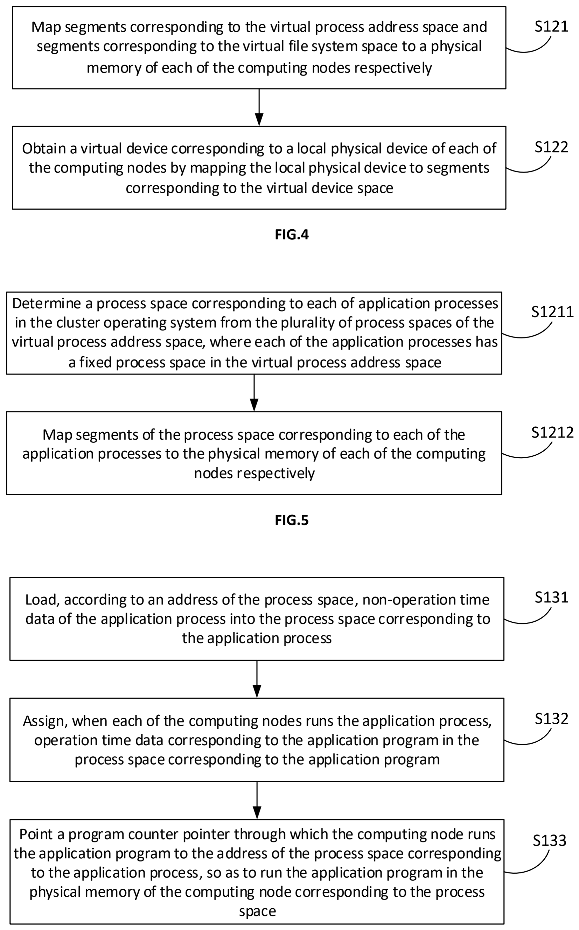

As shown in FIG. 4, in step S12, mapping the plurality of segments in the permanent virtual memory to the device of each of the computing nodes includes the following steps.

In step S121, segments corresponding to the virtual process address space and segments corresponding to the virtual file system space are mapped to the physical memory of each of the computing nodes respectively.

It can be understood that the segments corresponding to the virtual process address space and the segments corresponding to the virtual file system space are mapped to the physical memory registered to the permanent virtual memory of each of the computing nodes respectively, and will not be mapped to the physical memory locally reserved in the computing node. The physical memory may be a storage device, such as a physical memory module, or a non-volatile storage device.

In step S122, a virtual device corresponding to a local physical device of each of the computing nodes is obtained by mapping the local physical device to segments corresponding to the virtual device space.

The local physical device may be a hardware device of the computing node, such as a graphics card or a computing accelerator card.

The application process may run in the virtual process address space and then access the virtual device in the virtual device space, and then the local physical device of the computing node corresponding to the virtual device performs corresponding read/write operations. Similarly, the application process running in the virtual process address space may access the virtual system file space, and then the storage device of the computing node corresponding to the accessed virtual system file space performs corresponding read/write operations.

According to an embodiment of the present disclosure, the virtual process address space includes a plurality of process spaces. As shown in FIG. 5, in step S121, mapping the segments corresponding to the virtual process address space to the physical memory of each of the computing nodes includes the following steps.

In step S1211, a process space corresponding to each of application processes in the cluster operating system is determined from the plurality of process spaces of the virtual process address space, where each of the application processes has a fixed process space in the virtual process address space.

In the embodiments of the present disclosure, the address range of each process space in the permanent virtual memory PVM is permanently fixed, and the address ranges of the process spaces in the permanent virtual memory PVM may be continuous or discrete.

In the embodiments of the present disclosure, the address space of a specific application process running on the computing node in the PVM is permanently fixed, and process data may be transmitted. Thus, even if the application process is destroyed and then reloaded and run, various segment data of the application process is still allocated in the same previous process space. In this way, when the application process is enabled on different computing nodes, the corresponding process space may be queried through a fixed address without a process of redetermining the process space, thereby increasing the computing efficiency of the application process, and the same application process does not need to be loaded in a plurality of process spaces.

In step S1212, segments of the process space corresponding to each of the application processes are mapped to the physical memory of each of the computing nodes respectively.

In the embodiments of the present disclosure, the process space corresponding to the same application process may correspondingly include one or more segments, and thus the same process space may be mapped into the physical memories of one or more different computing nodes.

In the embodiments of the present disclosure, before the application process runs, one or more segments of the process space corresponding to the application process are mapped to the physical memory of each of the computing nodes respectively, that is, a process space may include one or more segments. Therefore, when an application process runs, if the process space corresponding to the application process includes one segment, there is one segment mapped to one computing node, and the application process runs in the process space of one computing node. If the process space corresponding to the application process includes a plurality of segments, the segments corresponding to the process space are mapped to a plurality of computing nodes, and the application process runs in the process spaces of the plurality of computing nodes.

According to an embodiment of the present disclosure, as shown in FIG. 6, on the basis of FIG. 5, in step S13, performing, by the application process running on each of the computing nodes through operations on the segments in the virtual process address space, operations on the device of the computing node to which the segments are mapped includes the following steps.

In step S131, according to an address of the process space, non-operation time data of the application process is loaded into the process space corresponding to the application process.

In the embodiments of the present disclosure, when the application process is loaded into the permanent virtual memory PVM, which specific process space in the permanent virtual memory PVM the application process is to be loaded into may be determined first according to a specific algorithm or mechanism (such as Hash or a signature).

In step S132, when each of the computing nodes runs the application process, operation time data corresponding to the application program is assigned in the process space corresponding to the application program.

In the embodiments of the present disclosure, after which specific process space in the permanent virtual memory PVM the application process is to be loaded into is determined, non-operation time data of the application process, such as code segments and data segments, is loaded into the above specific process space. Therefore, the virtual address of the application process in the permanent virtual memory PVM is definitely certain and permanent.

In step S133, a program counter pointer through which the computing node runs the application program is pointed to the address of the process space corresponding to the application process, so as to run the application program in the physical memory of the computing node corresponding to the process space.

In the embodiments of the present disclosure, when the computing node runs the loaded application process, the computing node firstly, by its own PVMM, allocates and initializes required operation time data, such as a BSS segment, a heap and a stack, for the application process in the process space of the application process in the permanent virtual memory PVM, and the computing node then, by its own PVMM, points a Program Counter (PC) pointer of the CPU to the fixed process space address of the process in the above PVM. The BSS segment is a memory area which is used for storing global variables and static variables that are uninitialized or initialized as 0 in the application program corresponding to the application process. The BSS segment is characterized by being readable, and will be automatically reset to zero before program execution. The program counter is a register in the CPU which is used for storing the address of the next instruction.

According to an embodiment of the present disclosure, the method further includes the following steps.

In a case where any application process has a data transmission requirement, an object pointer of data corresponding to the data transmission requirement in the virtual process address space is transmitted to a target application process.

When data transmission is required between the application processes, where the data transmission may be understood as that an application process requires other application processes to communicate data to itself or shares its own data to other application processes, in a CCOS, the data transmission does not need to be completed through the conventional network communication approach any more, and the application process merely needs to transmit the address (i.e., the object pointer) of the communicated (meaning that other application processes are required to transmit data to itself) or shared (meaning that its own data is shared to other application processes) data in the virtual memory PVM to another target application process.

The target application process completes data transmission by accessing the virtual process address space via the object pointer.

Following the above embodiment, the target application process may directly access the communicated or shared data through the address of the communicated or shared data in the permanent virtual memory PVM. When the address in the permanent virtual memory PVM which any computing node needs to access is mapped to the physical memory of another computing node, the mapping will be carried out by an approach of remote direct memory access by a Permanent Virtual Memory Global Memory Management Unit (PVM_GMMU) of the computing node, where the approach of remote direct memory access may be an access approach based on, for example, the RDMA protocol.

According to an embodiment of the present disclosure, in step S121, mapping the segments corresponding to the virtual process address space and the segments corresponding to the virtual file system space to the physical memory of each of the computing nodes respectively includes the following steps.

The physical memory provided by each of the computing nodes is registered to the permanent virtual memory.

In the embodiments of the present disclosure, the physical memory which is mapped to form the permanent virtual memory is registered to the permanent virtual memory, and the locally reserved physical memory will not be registered to the permanent virtual memory.

The size of the physical memory provided by each computing node may be different, and the specific size is determined by the PVMM in the computing node. The PVMM provides the size of the physical memory and the corresponding physical address to the permanent virtual memory.

The physical memory registered to the permanent virtual memory is divided into physical memory segments with the same size as the segments.

It can be understood that the physical memory divided from the computing node is further divided into physical memory segments with the same size as the segments of the permanent virtual memory PVM.

The segments corresponding to the virtual process address space and the segments corresponding to the virtual file system space are mapped to the physical memory segments of each of the computing nodes respectively.

In the embodiments of the present disclosure, there are correspondences between the physical memory segments of the computing node and the segments in the permanent virtual memory, that is, one physical memory segment of the computing node merely corresponds to one segment in the permanent virtual memory. Certainly, the segments in the permanent virtual memory are redundantly mapped to the physical memory segments of the plurality of computing nodes.

According to an embodiment of the present disclosure, mapping the segments corresponding to the virtual file system space to the physical memory of each of the computing nodes includes the following steps.

According to a predetermined policy, the segments corresponding to the virtual file system are mapped to physical memory segments of a storage device of each of the computing nodes.

In the embodiments of the present disclosure, a Permanent Virtual Memory Global File System Manager (PVM_GFSM) in the PVMM run by each of the computing nodes may permanently map the mapped physical memory segments in the virtual file system to a local non-volatile storage device of the computing node according to, for example, a synchronous or asynchronous predetermined policy. The non-volatile storage device may be a storage device, such as a hard disk.

Performing, on the device of the computing node to which the segment is mapped, the operations of the application process on the segment in the permanent virtual memory includes the following step.

Data read/write operations are performed in the physical memory segments of the storage device of the computing node by the application process running on each of the computing nodes, so as to perform data read/write operations in the virtual file system space by the application process running on each of the computing nodes.

In the embodiments of the present disclosure, the application program running on each of the computing nodes may directly read and write data from the virtual file system space through a pointer, thus performing the data read/write operations in the physical memory segments of the storage device of the computing node.

It can be noted that different from the non-operation time data and operation time data of the application process loaded or allocated in the process space, the data in the virtual file system space are system files, program files, and other types of data.

The data of each of the segments in the virtual file system space may be stored in the non-volatile storage devices of different computing nodes through a redundant mapping approach and/or a distributed consistency approach in the subsequent embodiments, thereby ensuring the security and consistency of data.

According to an embodiment of the present disclosure, mapping the segments corresponding to the virtual process address space and the segments corresponding to the virtual file system space to the physical memory of each of the computing nodes respectively includes the following step.

The segments corresponding to the virtual process address space and the segments corresponding to the virtual file system space are mapped to the physical memory of each of the computing nodes respectively by at least one of: the redundant mapping approach, or the distributed consistency approach.

In the embodiments of the present disclosure, the segments corresponding to the virtual process address space and the segments corresponding to the virtual file system space may be mapped to the physical memory of each of the computing nodes respectively by a 1: N multi-copy approach, an erasure code approach, or other redundant approaches.

Mapping the segments corresponding to the virtual process address space and the segments corresponding to the virtual file system space to the physical memory of each of the computing nodes by the 1: N multi-copy approach respectively may be understood as that each segment in the permanent virtual memory is copied into N copies to obtain an original segment and N copy segments, and the original segment and copy segments of each segment are then mapped to the physical memories of different computing nodes respectively. Certainly, data stored into a segment each time will also be copied into N copies, and then the data may be stored into different computing nodes. Thus, in a case where the data in the segments of any computing node is lost, the data may be recovered through the data in other computing nodes.

Mapping the segments corresponding to the virtual process address space and the segments corresponding to the virtual file system space to the physical memory of each of the computing nodes by the erasure code approach respectively may be understood as that a plurality of segments are taken as a main body for one erasure code, and an erasure code corresponding to the main body is generated. Each of the plurality of segments is then mapped to a computing node respectively, and each erasure code is also mapped to a computing node respectively. When the data in any segment is lost, the lost data may be obtained by means of reverse calculation of the erasure code.

By redundantly backing up the data in the segments in the permanent virtual memory PVM by the redundant mapping approach and/or the distributed consistency approach, not only may the security of the data be ensured and data loss be prevented, but also the situation that the data in the physical memory of a computing node cannot be read or written due to disconnection of the computing node may be avoided, thereby ensuring the running stability of the application process. In addition, the situation that the application process has to wait for a computing node to get online due to the disconnection of the computing node is avoided, thereby increasing the running efficiency of the application process.

For example, the distributed consistency approach may be a distributed consistency approach based on the RAFT algorithm. That is, consistency is achieved by selecting a leading computing node from all the computing nodes and then giving the leading computing node full responsibility for managing a copy log. The leading computing node receives log entries from each of the computing nodes, copies the log entries into the segments of other computing nodes, and instructs other computing nodes to apply the log entries into respective state machines under the premise of ensuring security.

It can be understood that the leading computing node may determine which segment in the virtual file system space new log entries need to be placed in, without consulting with other computing nodes. If the leading computing node is down, a new leading computing node may be selected, in this way, it can be ensured that when the number of computing nodes in the CCOS cluster is increased or decreased, each computing node always keeps consistent records of the mapping relationship between the segments in the permanent virtual memory PVM and the physical memory segments of the computing node. The above mapping may be completed by the PVM_GMMU of the PVMM of the computing node, and maintained and recorded by the PVMM of the computing node.

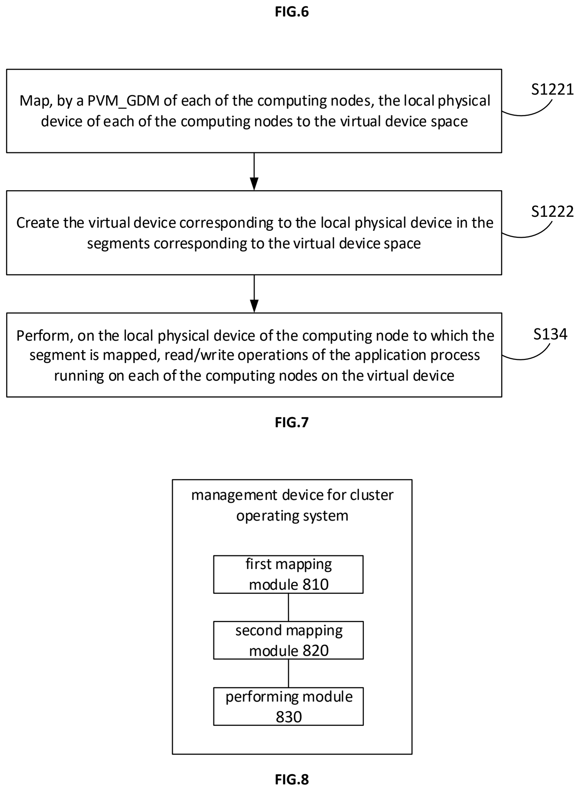

According to an embodiment of the present disclosure, as shown in FIG. 7, in S122, obtaining the virtual device corresponding to the local physical device of each of the computing nodes by mapping the local physical device to the segments corresponding to the virtual device space includes the following steps.

In step S1221, by a PVM_GDM of each of the computing nodes, the local physical device of each of the computing nodes is mapped to the virtual device space.

In the embodiments of the present disclosure, the local physical device may include a physical device of the computing node, such as a graphics card or a computing accelerator card.

In step S1222, the virtual device corresponding to the local physical device is created in the segments corresponding to the virtual device space.

In the embodiments of the present disclosure, part of the permanent virtual memory PVM is divided out as a virtual device space shared by the cluster operating system, and different computing nodes may selectively map the local physical device of the computing node to the virtual device space by the PVM_GDM in the respective PVMM, and create a virtual device corresponding to the local physical device in the virtual device space.

Thus, the local physical devices of the computing nodes may be globally mapped to the permanent virtual memory, and thus any application process may directly call the local physical device of any computing node from the permanent virtual memory, thereby making full use of the local physical device resources of the computing nodes and solving the problem of low utilization rate of the computing node resources of the cluster operating system in the cloud computing scenario.

According to an embodiment of the present disclosure, on the basis of FIG. 7, in step S13, performing, on the device of the computing node to which the segment is mapped, the operations of the application process on the segment in the permanent virtual memory includes the following step.

In step S134, read/write operations of the application process running on each of the computing nodes on the virtual device are performed on the local physical device of the computing node to which the segment is mapped.

In the embodiments of the present disclosure, each of the application processes running in the permanent virtual memory PVM may access the virtual devices in the virtual device space, and the read/write operations of the application process on the virtual device in the virtual device space may be performed on the local physical device of the corresponding computing node by a synchronous or asynchronous approach by the PVM_GDM of the PVMM.

In this way, the read/write operations on the virtual device in the virtual device space may be performed on the local physical device of the corresponding computing node, and the application process does not need to manually or explicitly access other computing nodes when using the local physical devices of the computing nodes, and the use of the local physical devices of other computing nodes may be implemented insensibly and transparently. Therefore, while distributed computing/application development is greatly simplified, the working efficiency of application processes or computing tasks is greatly improved, and the convenience and efficiency of device access across nodes are improved.

An embodiment of the present disclosure further proposes a device for implementing a cluster operating system. As shown in FIG. 8, the device for implementing a cluster operating system includes a first mapping module 810, a second mapping module 820, and a performing module 830.

The first mapping module 810 is configured to obtain a permanent virtual memory by mapping a physical memory provided by each of computing nodes in the cluster operating system, where the permanent virtual memory includes segments of a plurality of types of virtual spaces.

The second mapping module 820 is configured to map a plurality of segments in the permanent virtual memory to a device of each of the computing nodes.

The performing module 830 is configured to perform, on a device of a computing node to which a segment is mapped, operations of an application process on the segment in the permanent virtual memory, where each of the computing nodes in the cluster operating system has an application process running on it.

According to an embodiment of the present disclosure, the plurality of types of virtual spaces include a virtual process address space, a virtual file system space, and a virtual device space, and the second mapping module 820 is further configured to:
map segments corresponding to the virtual process address space and segments corresponding to the virtual file system space to a physical memory of each of the computing nodes respectively; and
obtain a virtual device corresponding to a local physical device of each of the computing nodes by mapping the local physical device to segments corresponding to the virtual device space.

According to an embodiment of the present disclosure, the virtual process address space includes a plurality of process spaces, and the second mapping module 820 is further configured to:
determine a process space corresponding to each of application processes in the cluster operating system from the plurality of process spaces of the virtual process address space, where each of the application processes has a fixed process space in the virtual process address space; and
map segments of the process space corresponding to each of the application processes to the physical memory of each of the computing nodes respectively.

According to an embodiment of the present disclosure, the performing module 830 is further configured to:
load, according to an address of the process space, non-operation time data of the application process into the process space corresponding to the application process;
assign, when each of the computing nodes runs the application process, operation time data corresponding to the application program in the process space corresponding to the application program; and
point a program counter pointer through which the computing node runs the application program to the address of the process space corresponding to the application process, so as to run the application program in the physical memory of the computing node corresponding to the process space.

According to an embodiment of the present disclosure, the device further includes a transmission module, which is configured to:
transmit, in a case where any application process has a data transmission requirement, an object pointer of data corresponding to the data transmission requirement in the virtual process address space to a target application process; and
complete data transmission by the target application process accessing the virtual process address space via the object pointer.

According to an embodiment of the present disclosure, the second mapping module 820 is further configured to:
register the physical memory provided by each of the computing nodes to the permanent virtual memory;
divide the physical memory registered to the permanent virtual memory into physical memory segments with the same size as the segments; and
map the segments corresponding to the virtual process address space and the segments corresponding to the virtual file system space to the physical memory segments of each of the computing nodes respectively.

According to an embodiment of the present disclosure, the second mapping module 820 is further configured to:
map, according to a predetermined policy, the segments corresponding to the virtual file system to physical memory segments of a storage device of each of the computing nodes; and
the performing module 830 is further configured to:
perform data read/write operations in the physical memory segments of the storage device of the computing node by the application process running on each of the computing nodes, so as to perform data read/write operations in the virtual file system space by the application process running on each of the computing nodes.

According to an embodiment of the present disclosure, the second mapping module 820 is further configured to:
map the segments corresponding to the virtual process address space and the segments corresponding to the virtual file system space to the physical memory of each of the computing nodes respectively by at least one of: a redundant mapping approach, or a distributed consistency approach.

According to an embodiment of the present disclosure, the second mapping module 820 is further configured to:
map, by a PVM_GDM of each of the computing nodes, the local physical device of each of the computing nodes to the virtual device space; and
create the virtual device corresponding to the local physical device in the segments corresponding to the virtual device space.

According to an embodiment of the present disclosure, the performing module 830 is further configured to:
perform, on the local physical device of the computing node to which the segment is mapped, read/write operations of the application process running on each of the computing nodes on the virtual device.

It is to be noted that the above explanation of the embodiments of the method for implementing a cluster operating system is also applicable to the device for implementing a cluster operating system of the present embodiment, and therefore will not be repeated here.

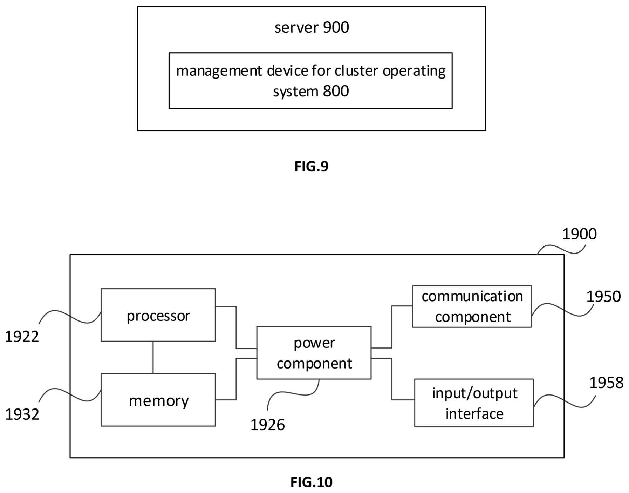

In order to implement the above embodiments, the present disclosure further proposes a server 900. As shown in FIG. 9, the server 900 includes a device 800 for implementing a cluster operating system to implement the above method for implementing a cluster operating system.

FIG. 10 is a block diagram of an electronic device 1900 according to an example. For example, the electronic device 1900 may be provided as a cloud server, and a plurality of cloud servers may form the cluster operating system in the embodiments of the present disclosure for performing the steps of the above method for implementing a cluster operating system and performing the operations of the computing nodes in the above cluster operating system. Referring to FIG. 10, the electronic device 1900 includes one or more processors 1922 and a memory 1932 for storing a computer program executable by the processor 1922. The computer program stored in the memory 1932 may include one or more modules respectively corresponding to a set of instructions. In addition, the processor 1922 may be configured to execute the computer program, so as to perform the steps of the above method for implementing a cluster operating system and perform the operations of the computing nodes in the above cluster operating system.

In addition, the electronic device 1900 may further include a power component 1926 and a communication component 1950, where the power component 1926 may be configured to perform the power management of the electronic device 1900, and the communication component 1950 may be configured to implement the communication of the electronic device 1900, for example, wired or wireless communication. In addition, the electronic device 1900 may further include an input/output (I/O) interface 1958. The electronic device 1900 may operate an operating system stored in the memory 1932, e.g., Windows Server^{™}, Mac OS x^{™}, Unix^{™}, Linux^{™}, etc.

In another example, a computer-readable storage medium including program instructions is further provided. When executed by a processor, the program instructions implement the steps of the above method for implementing a cluster operating system and implement the operations of the computing nodes in the above cluster operating system. For example, the computer-readable storage medium may be the above memory 1932 including program instructions, where the above program instructions may be executed by the processor 1922 of the electronic device 1900 to complete the steps of the above method for implementing a cluster operating system and implement the operations performed by the computing nodes in the above cluster operating system.

In another example, a computer program product is further provided. The computer program product includes a computer program executable by a programmable device, where the computer program has a code portion which is configured to, when executed by the programmable device, implement the above method for implementing a cluster operating system and implement the operations of the computing nodes in the above cluster operating system.

In order to achieve the above embodiments, the present disclosure further proposes a computing processing device. The computing processing device includes:
a memory having stored thereon computer-readable codes; and
one or more processors, where when the computer-readable codes are executed by the one or more processors, the computing processing device performs the above method for implementing a cluster operating system.

In order to achieve the above embodiments, the present disclosure further proposes a computer program. The computer program includes computer-readable codes, which, when running on a computing processing device, cause the computing processing device to perform the above method for implementing a cluster operating system.

In order to achieve the above embodiments, the present disclosure further proposes a computer-readable storage medium having stored thereon the above computer program.

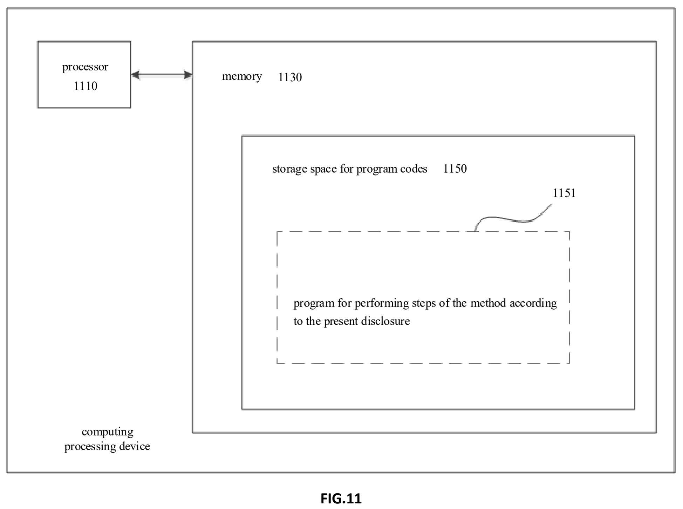

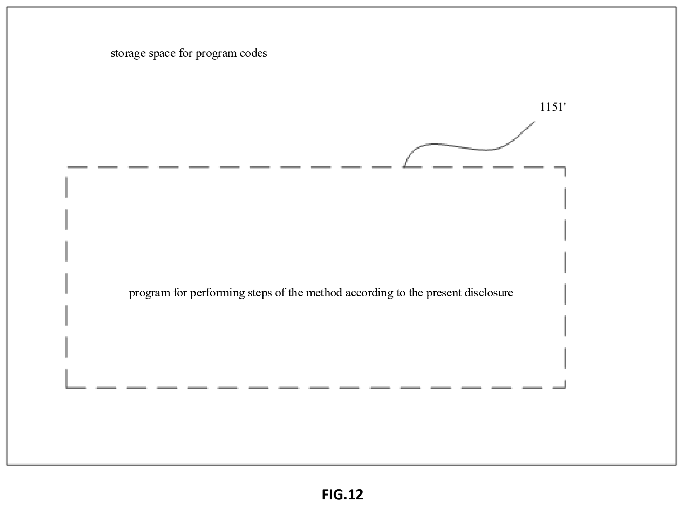

FIG. 11 provides a schematic diagram of a structure of a computing processing device for an embodiment of the present disclosure. The computing processing device generally includes a processor 1110 and a computer program product or a computer-readable medium in the form of a memory 1130. The memory 1130 may be an electronic memory, such as a flash memory, an Electrically Erasable Programmable Read-Only Memory (EEPROM), an Erasable Programmable Read-Only Memory (EPROM), a hard disk, or a Read-Only Memory (ROM). The memory 1130 has a storage space 1150 for program codes 1151 for implementing any method step in the above method. For example, the storage space 1150 for the program codes may include individual program codes 1151 for respectively implementing various steps in the above method. These program codes may be read from or written into one or more computer program products. These computer program products include program code carriers, such as hard disks, compact disks (CDs), memory cards, or floppy disks. Such a computer program product is generally a portable or fixed storage unit as shown in FIG. 12. The storage unit may have storage segments, storage spaces and the like arranged similarly to those of the memory 1130 in the server of FIG. 11. For example, the program codes may be compressed in an appropriate form. Generally, the storage unit includes computer-readable codes 1151', i.e., codes that may be read by a processor such as the processor 1110. When run by a server, these codes cause the server to perform various steps in the method described above.

In the description of the present specification, the description of reference terms such as "one embodiment," "some embodiments," "examples," "specific examples," or "some examples" means that the specific features, structures, materials, or characteristics described in reference to the embodiments or examples are included in at least one embodiment or example of the present disclosure. In the present specification, the schematic description of the aforementioned terms does not necessarily refer to the same embodiment or example. Moreover, the described specific features, structures, materials, or characteristics may be combined in any one or more embodiments or examples in an appropriate manner. In addition, those skilled in the art may integrate and combine different embodiments or examples described in the present specification and the features of different embodiments or examples without contradiction.

In addition, the terms "first" and "second" are merely intended for description rather than be understood as indicating or implying relative importance or implicitly indicating the number of indicated technical features. Therefore, features limited with "first" and "second" may explicitly or implicitly include at least one of these features. In the description of the present disclosure, unless explicitly and specifically limited otherwise, "a plurality of" means at least two, e.g., two or three.

Any process or method description in the flowcharts or otherwise described herein may be understood as representing a module, segment or part of codes including one or more executable instructions for implementing a customized logic function or steps of the process, and the scope of the preferred implementations of the present disclosure includes other implementations, where the functions may be performed in a substantially simultaneous manner or in a reverse order according to the involved functions rather than in the shown or discussed order, which is to be understood by those skilled in the art to which the embodiments of the present disclosure belong.

Logic and/or steps shown in the flowcharts or otherwise described herein, for example, may be considered as a sequential list of executable instructions for implementing logical functions, and may be specifically implemented in any computer-readable medium, to be used by instruction execution systems, devices, or equipment (for example, a computer-based system, a system including a processor, or another system that may fetch instructions from the instruction execution systems, devices, or equipment and execute the instructions), or by a combination of these instruction execution systems, devices, or equipment. As used herein, the "computer-readable medium" may be any device that may include, store, communicate, propagate, or transmit a program to be used by instruction execution systems, devices, or equipment, or by a combination of these instruction execution systems, devices, or equipment. More specific examples (a non-exhaustive list) of the computer-readable medium include the following: an electrical connection part (an electrical device) with one or more buses, a portable computer cartridge (a magnetic device), a Random-Access Memory (RAM), a Read-Only Memory (ROM), an Erasable Programmable Read-Only Memory (EPROM or flash memory), an optical fiber device, and a Compact Disc Read-Only Memory (CDROM). In addition, the computer-readable medium may even be a piece of paper on which the program may be printed or any other appropriate media, because, for example, the paper or other media may be optically scanned, and the program may be electrically acquired by processing such as edition, decoding, or any other appropriate means when necessary and then stored in a computer memory.

It is to be understood that various parts of the present disclosure may be implemented by hardware, software, firmware, or a combination thereof. In the above implementations, a plurality of steps or methods may be implemented by software or firmware stored in a memory and executed by a suitable instruction execution system. For example, if they are implemented by hardware, as in another implementation, they may be implemented by any of the following techniques well-known in the art or a combination thereof: a discrete logic circuit with a logic gate circuit for implementing logic functions on data signals, an application-specific integrated circuit with a suitable combinational logic gate circuit, a Programmable Gate Array (PGA), a Field Programmable Gate Array (FPGA), etc.

Those of ordinary skill in the art may understand that all or part of the steps carried by the method of the above embodiments may be implemented by a program instructing related hardware, where the program may be stored in a computer-readable storage medium, and when the program is executed, one or a combination of the steps of the method embodiments is included.

In addition, each functional unit in each embodiment of the present disclosure may be integrated in one processing module, or each unit may physically exist alone, or two or more units may be integrated in one module. The above integrated modules may be implemented in the form of hardware or in the form of software functional modules. If implemented in the form of software functional modules and sold or used as separate products, the integrated modules may also be stored in a computer-readable storage medium.

The storage medium mentioned above may be a read-only memory, a magnetic disk, or an optical disk, etc. Although the embodiments of the present disclosure are shown and described above, it can be understood that the above embodiments are exemplary and cannot be construed as limiting the present disclosure, and those of ordinary skill in the art may make changes, modifications, replacements and variations to the above embodiments within the scope of the present disclosure.

## Claims

1. A method for implementing a cluster operating system, comprising:
obtaining a permanent virtual memory by mapping a physical memory provided by each of computing nodes in the cluster operating system, wherein the permanent virtual memory comprises segments of a plurality of types of virtual spaces;
mapping a plurality of segments in the permanent virtual memory to a device of each of the computing nodes; and
performing, on a device of a computing node to which a segment is mapped, operations of an application process on the segment in the permanent virtual memory, wherein each of the computing nodes in the cluster operating system has an application process running on it.

2. The method according to claim 1, wherein the plurality of types of virtual spaces comprise a virtual process address space, a virtual file system space, and a virtual device space, and mapping the plurality of segments in the permanent virtual memory to the device of each of the computing nodes comprises:
mapping segments corresponding to the virtual process address space and segments corresponding to the virtual file system space to a physical memory of each of the computing nodes respectively; and
obtaining a virtual device corresponding to a local physical device of each of the computing nodes by mapping the local physical device to segments corresponding to the virtual device space.

3. The method according to claim 2, wherein the virtual process address space comprises a plurality of process spaces, and mapping the segments corresponding to the virtual process address space to the physical memory of each of the computing nodes comprises:
determining a process space corresponding to each of application processes in the cluster operating system from the plurality of process spaces of the virtual process address space, wherein each of the application processes has a fixed process space in the virtual process address space; and
mapping segments of the process space corresponding to each of the application processes to the physical memory of each of the computing nodes respectively.

4. The method according to claim 3, wherein performing, by the application process running on each of the computing nodes through operations on the segments in the virtual process address space, operations on the device of the computing node to which the segments are mapped comprises:
loading, according to an address of the process space, non-operation time data of the application process into the process space corresponding to the application process;
assigning, when each of the computing nodes runs the application process, operation time data corresponding to the application program in the process space corresponding to the application program; and
pointing a program counter pointer through which the computing node runs the application program to the address of the process space corresponding to the application process, so as to run the application program in the physical memory of the computing node corresponding to the process space.

5. The method according to any one of claims 2 to 4, further comprising:
transmitting, in a case where any application process has a data transmission requirement, an object pointer of data corresponding to the data transmission requirement in the virtual process address space to a target application process; and
completing data transmission by the target application process accessing the virtual process address space via the object pointer.

6. The method according to any one of claims 2 to 4, wherein mapping the segments corresponding to the virtual process address space and the segments corresponding to the virtual file system space to the physical memory of each of the computing nodes respectively comprises:
registering the physical memory provided by each of the computing nodes to the permanent virtual memory;
dividing the physical memory registered to the permanent virtual memory into physical memory segments with a same size as the segments; and
mapping the segments corresponding to the virtual process address space and the segments corresponding to the virtual file system space to the physical memory segments of each of the computing nodes respectively.

7. The method according to claim 6, wherein mapping the segments corresponding to the virtual file system space to the physical memory of each of the computing nodes comprises:
mapping, according to a predetermined policy, the segments corresponding to the virtual file system to physical memory segments of a storage device of each of the computing nodes; and
performing, on the device of the computing node to which the segment is mapped, the operations of the application process on the segment in the permanent virtual memory comprises:
performing data read/write operations in the physical memory segments of the storage device of the computing node by the application process running on each of the computing nodes, so as to perform data read/write operations in the virtual file system space by the application process running on each of the computing nodes.

8. The method according to any one of claims 2 to 4, wherein mapping the segments corresponding to the virtual process address space and the segments corresponding to the virtual file system space to the physical memory of each of the computing nodes respectively comprises:
mapping the segments corresponding to the virtual process address space and the segments corresponding to the virtual file system space to the physical memory of each of the computing nodes respectively by at least one of: a redundant mapping approach, or a distributed consistency approach.

9. The method according to any one of claims 2 to 4, wherein obtaining the virtual device corresponding to the local physical device of each of the computing nodes by mapping the local physical device to the segments corresponding to the virtual device space comprises:
mapping, by a Permanent Virtual Memory Global Device Managers (PVM_GDM) of each of the computing nodes, the local physical device of each of the computing nodes to the virtual device space; and
creating the virtual device corresponding to the local physical device in the segments corresponding to the virtual device space.

10. The method according to claim 9, wherein performing, on the device of the computing node to which the segment is mapped, the operations of the application process on the segment in the permanent virtual memory comprises:
performing, on the local physical device of the computing node to which the segment is mapped, read/write operations of the application process running on each of the computing nodes on the virtual device.

11. A device for implementing a cluster operating system, comprising:
a first mapping module configured to obtain a permanent virtual memory by mapping a physical memory provided by each of computing nodes in the cluster operating system, wherein the permanent virtual memory comprises segments of a plurality of space types;
a second mapping module configured to map a plurality of segments in the permanent virtual memory to a device of each of the computing nodes; and
a performing module configured to perform, on a device of a computing node to which a segment is mapped, operations of an application process on the segment in the permanent virtual memory, wherein each of the computing nodes in the cluster operating system has an application process running on it.

12. A computing processing device, comprising:
a memory having stored thereon computer-readable codes; and
one or more processors, wherein when the computer-readable codes are executed by the one or more processors, the computing processing device performs the method for implementing a cluster operating system according to any one of claims 1 to 10.

13. A computer program, comprising computer-readable codes which, when running on a computing processing device, cause the computing processing device to perform the method for implementing a cluster operating system according to any one of claims 1 to 10.

14. A computer-readable storage medium, having stored thereon the computer program of claim 13.
